# EUROPEAN PATENT SPECIFICATION

(11) **EP 2 392 238 B1**
(45) Date of publication and mention of the grant of the patent: **20.02.2013**
(21) Application number: 10382164.1
(22) Date of filing: 07.06.2010
(51) Int. Cl.: A47J 27/08

(54) **Cooking appliance adapted for low pressure cooking**
Zum Kochen unter niedrigem Druck geeignetes Kochgerät
Appareil de cuisson adapté à la cuisson à basse pression

(43) Date of publication of application: 07.12.2011
(73) Proprietor: Fagor, S. Coop., 20500 Arrasate-Mondragon (ES)
(72) Inventor: Zubiate Gorosabel, Urtzi, 20550, ARETXABALETA (ES); Pérez Miguel, David, 20500, MONDRAGON (ES)
(74) Representative: Igartua, Ismael

(56) References cited:
- DE-A1- 10 114 098
- DE-A1- 10 131 009
- DE-A1- 19 705 697
- US-A1- 2008 233 256

## Description

### TECHNICAL FIELD

This invention relates to a cooking appliance adapted for vacuum cooking or low-pressure cooking.

### PRIOR ART

Vacuum or low-pressure cooking is a known cooking technique, the objective of which is to enhance the flavour and aroma of the food to be cooked and ensure that it is healthy and can be conserved afterwards. This type of cooking enables cooking at a reduced temperature, with the result that the food is not overcooked; that the lower part of the food and the top part are properly cooked; and that vitamins are not lost during cooking.

Generally speaking, vacuum cooking includes an initial stage in which the food to be cooked is pre-cooked or marked, a stage in which the pre-cooked or marked food is vacuum-packed, and a subsequent cooking stage in which the vacuum-packed products are cooked mainly in a bain-marie.

ES1057342U thus describes an appliance for vacuum cooking that enables food to be steam-cooked or cooked by liquid immersion, it comprising for this purpose a main body that includes the heat source and a second element that includes a body or vessel to which may be attached three interchangeable covers: a conventional cover for processes under atmospheric pressure, a cover for processes under overpressure, and a cover for processes in a vacuum.

EP717917B1 describes a cooking appliance that comprises a cooking chamber, and evacuation means for reducing the pressure inside the cooking chamber, the evacuation means including an evacuation pipe that communicates the evacuation means to a bottom area and a top area of the cooking chamber. The pressure inside the cooking chamber is selected, with the result that the vacuum inside the cooking chamber is obtained selectively from the bottom area or from the top area.

JP2008-175421 describes a microwave cooking appliance that comprises a cooking chamber inside of which is arranged a body that is fixed sealed to the base of the chamber and which includes a pipe through which the vacuum is formed inside the body. The inner body withstands the vacuum conditions, thereby enabling the conventional outer structure of a microwave cooking appliance to be maintained.

### DISCLOSURE OF THE INVENTION

The object of this invention is to provide a cooking appliance adapted for low-pressure cooking as defined in the claims.

The cooking appliance according to the invention adapted for low-pressure cooking comprises a cooking body adapted to house the food inside, and vacuum means arranged on the exterior of the cooking body and adapted to create the vacuum inside the cooking body.

The cooking body comprises a resistant body adapted to withstand the vacuum conditions, the resistant body including at least one casing that delimits inside at least one vacuum chamber and a support plate that includes a first part fixed perimetrally to an end of at least one casing, and a second part that projects out in relation to the first part, there being arranged fixed to said second part a sealing means against which a door of the cooking appliance closes in order to seal at least a vacuum chamber when the vacuum means are activated.

A compact cooking body with an optimised shape is obtained and which enables its simple assembly in the cooking appliance, and which includes a support plate shape that enables the deformations caused by the vacuum inside the cooking body to be absorbed, thereby preventing said deformations from undermining the sealed nature of the closure of the door against the cooking bodythrough the sealing means.

These and other advantages and characteristics of the invention will be made evident in the light of the drawings and the detailed description thereof.

### DESCRIPTION OF THE DRAWINGS

Figure 1 shows a sectional view of the cooking appliance, which comprises a cooking body, according to the invention.
Figure 2 shows a front view of the cooking appliance shown in Figure 1, without a door.
Figure 3 shows a perspective view of the cooking body shown in Figure 1, assembled to support means comprised in the cooking appliance shown in Figure 1.
Figure 4 shows a perspective sectional view of the cooking body shown in Figure 1 without heating means comprised in the cooking appliance shown in Figure 1.
Figure 5 shows a perspective view of an inner body comprised in the cooking body shown in Figure 1.
Figure 6 shows a perspective view of a resistent body comprised in the cooking body shown in Figure 1.
Figure 7 shows a longitudinal section of the resistent body shown in Figure 6.
Figure 8 shows a detail of the resistent body shown in Figure 7.

### DETAILED DISCLOSURE OF THE INVENTION

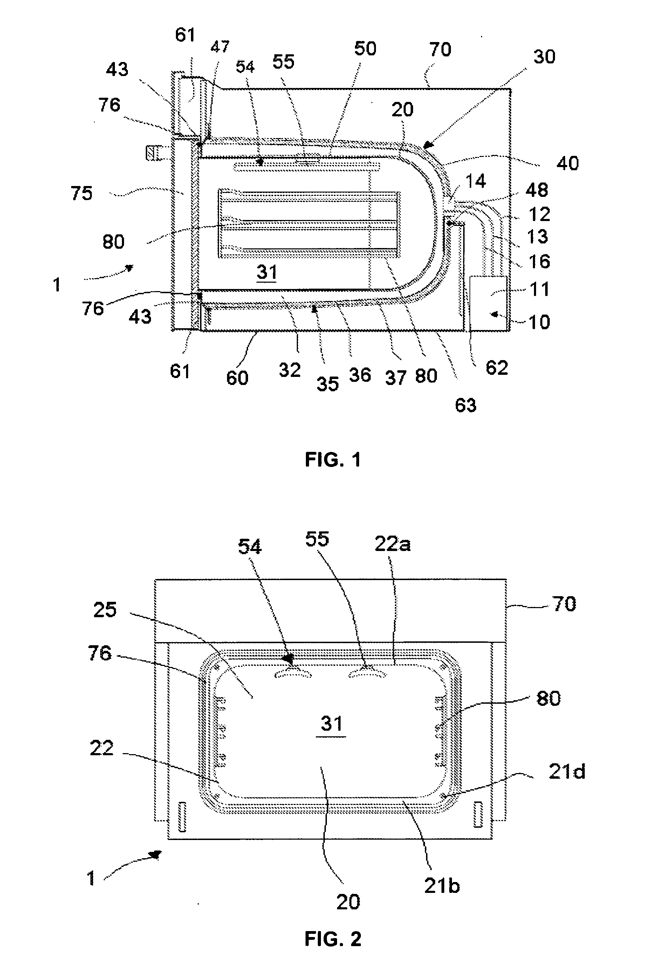

The cooking appliance 1 according to the invention, shown in Figure 1, specifically a domestic oven, is adapted for low-pressure cooking, in other words for vacuum cooking at a controlled temperature, and comprises a cooking body 30 that delimits a first chamber 31 open at one end and adapted to house the food to be cooked, the cooking body 30 being adapted to withstand vacuum conditions in the first chamber 31, a casing 70 that houses the cooking body 30 inside, a door 75 adapted to close the first chamber 31, and vacuum means 10 arranged on the exterior of the cooking body 30, adapted to create the vacuum inside the first chamber 31.

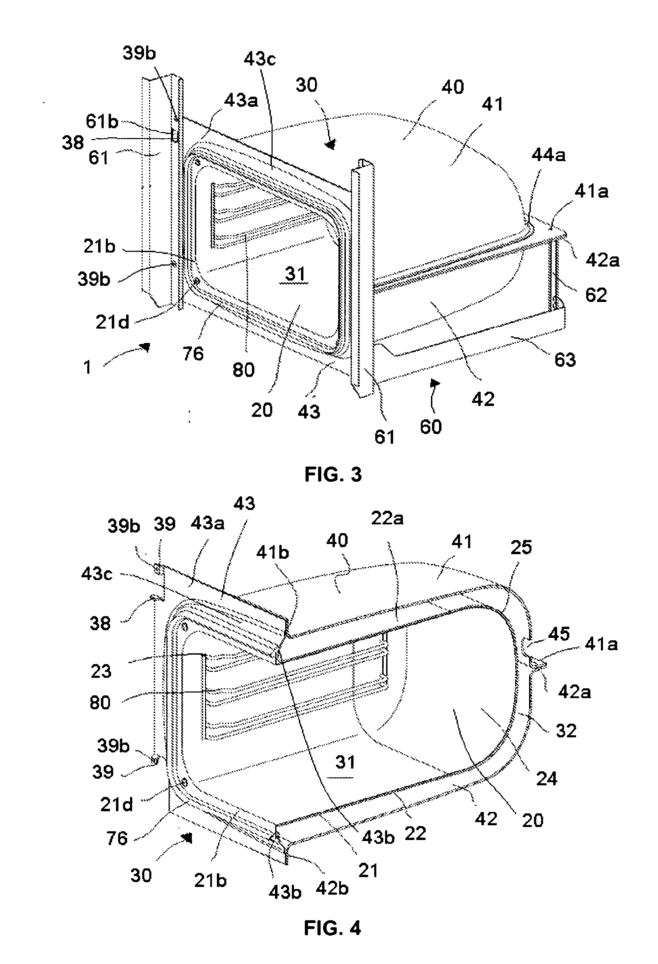

The cooking body 30, shown in detail in Figure 4, comprises an inner body or first body 20 open at one end, the interior of which delimits the first chamber 31, and a resistent body or second body 40 open at one end, the first body 20 being arranged housed in the interior of the second body 40 in such a way that the second body 40 closes against the first body 20, the exterior of the first body 20 and inside the second body 40 delimiting a second chamber 32.

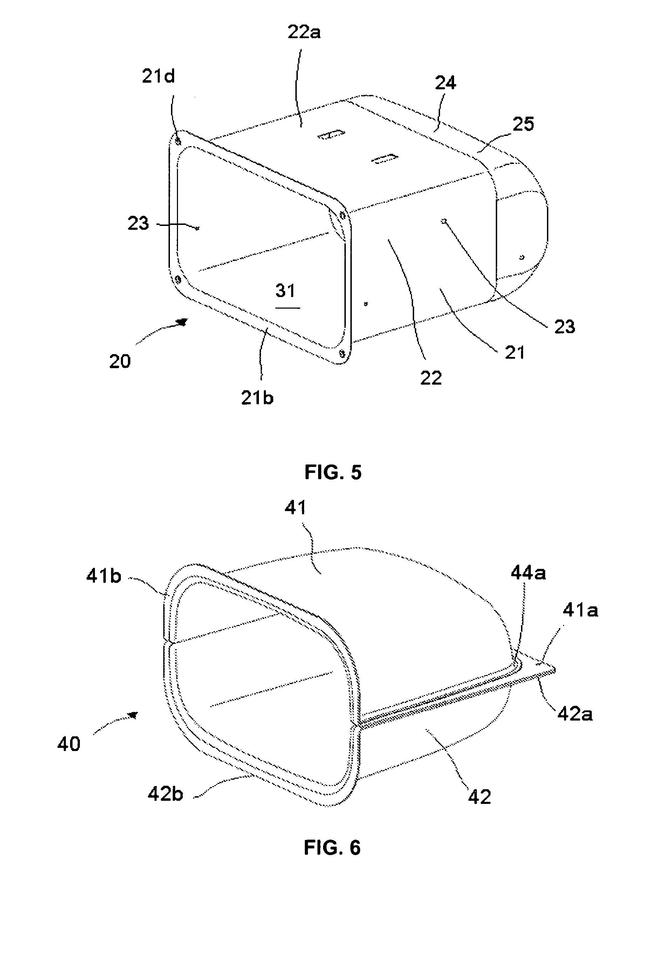

In addition, the first body 20 comprises communicating holes 23, shown in detail in Figure 5, which communicates the first chamber 31 to the second chamber 32, with the result that the first chamber 31 and the second chamber 32 are subjected to the same pressure. The communication holes 23 have a minimum diameter, sufficient to allow the passage of air between the first chamber 31 and the second chamber 32. In the embodiment shown, the communication holes 23 correspond with the fixing holes of lateral guides 80, shown in Figures 1 to 4, arranged to support trays not shown in the figures. In other embodiments not shown in the figures, both types of holes may not coincide.

The first body 20, shown in detail in Figure 5, comprises a substantially rectangular first part 21 with a transverse cross-section, delimited by substantially flat lateral walls 22, and a substantially concave second part 24, delimited by a back wall 25, with the result that the lateral walls 22, along with the back wall 25, delimit the first chamber 31. The first part 21 is fixed to the second part 24 by means of welding, although they may be connected by any other known means.

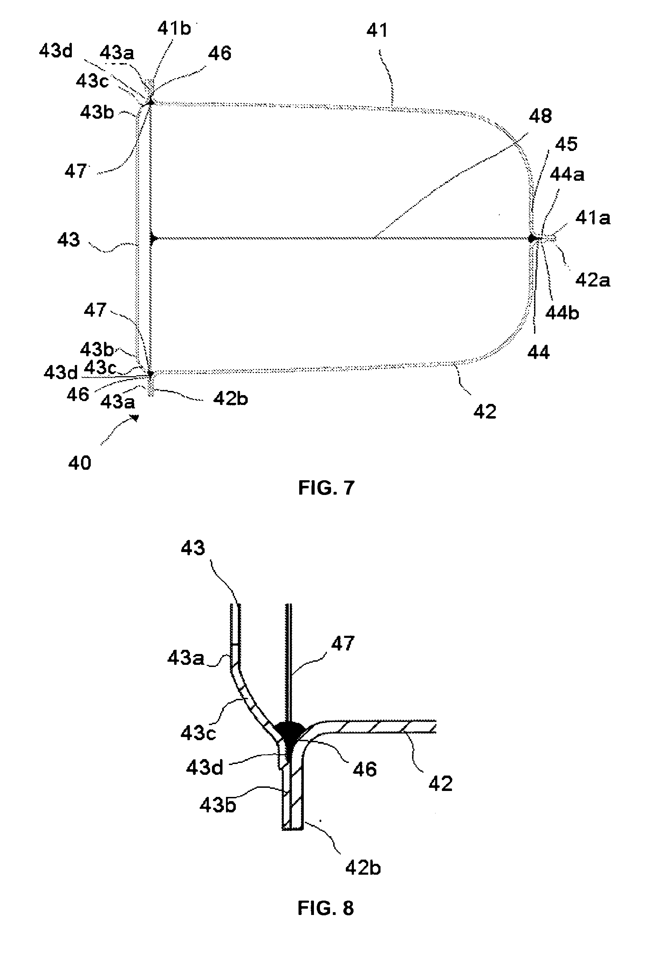

Additionally, the second body 40 may be made of a single piece, although it preferably comprises two substantially symmetrical casings 41,42, each one of which is substantially vaulted, and a front plate 43. Each casing 41,42, shown in detail in Figures 6 and 7, includes a respective perimeter lateral rim 41 a, 42a through which the casings 41,42 are attached to each other by means of welding or other known fixing means, and a respective peripheral front rim 41b,42b, through which both casings 41,42 are fixed to the front plate 43.

The front plate 43, shown in detail in Figures 4, 7 and 8, has a geometry adapted to withstand the vacuum pressure, which reduces the deformation of said front plate 43 towards the interior of the second chamber 32 due to the effect of said vacuum, and includes a substantially flat first part 43a that is arranged fixed to the front rim 41 b, 42b by known fixing methods such as welding, screws, etc; a substantially flat second part 43b adapted to close the second chamber 32, closing against the first body 20 by means of a gasket 76, shown in Figures 1 to 4; and an intermediate part 43c, substantially curved towards the exterior of the second chamber 32, said intermediate part 43c being continuous to the first part 43a and the second part 43b.

In addition, to ensure that the joints between the casings 41,42 and the front plate 43 are sealed tight, each lateral rim 41 a, 42a includes a respective gap 44a,44b, shown in detail in Figure 7, with the result that when the casings 41,42 are fixed to each other, the gaps 44a,44b that are arranged facing each other define a perimeter housing 44 in which is tightly arranged an insulating seal 48 that seals the joint. Furthermore, the front plate 43 includes a gap 43d, arranged between the first part 43a and the second part 43b, shown in Figure 8, with the result that when the front plate 43 is fixed to the casings 41,42, the gap 43d defining, along with the front rim 41 b,42b, a housing 46 in which an insulating seal 47 is tightly arranged sealing the joint between the front plate 43 and the casings 41,42.

In other embodiments not shown in the figures, the gap 43d may be comprised on the front rim 41 b,42b of the casing 41,42 instead of on the front plate 43.

The first body 20 is arranged fixed to the second body 40 at discrete points, with the result that the direct contact surface is minimal, the purpose being to reduce the transmission of heat between both bodies 20,40, which is also achieved by means of the gasket 76 arranged between both bodies 20,40. In the embodiment shown in the figures, the discrete contact points are arranged in the corners of a perimeter rim 21 b comprised in the first body 20, as a result of which said perimeter rim 21 b includes, in each corner, a hole 21 d through which it is fixed to the second part 34b of the front plate 34 of the second body 40 by means of screws.

On the other hand, the first body 20 projects out in relation to the second body 40, due to the shape of the front plate 43 of said second body 40, the door 75, shown in Figure 1, closing against the gasket 76 arranged between both bodies 20,40, shown in Figures 2 to 4, delimiting the first chamber 31.

In addition, the vacuum means 10, shown in Figure 1, comprise a vacuum pump 11 that is housed inside the casing 70, a filling pipe 16 connected to the second chamber 32, adapted to supply air to the interior of said second chamber 32; a vacuum pipe 12 that communicates the vacuum pump 11 to the second chamber 32, adapted to extract air from the interior of said second chamber 32; at least one electric valve, not shown in the figures, and which regulates the filling or emptying of the second chamber, and at least one pressure sensor 13, preferably differential, to measure the difference in pressure between the interior of the second body 40 and the exterior of the cooking appliance 1.

The second body 40 comprises in one of the casings 41,42 an opening 45 arranged on a substantially flat surface corresponding to the back wall of the casings 41,42, shown in Figures 1, 4 and 7, in which is housed a tight connector 14, schematically shown in Figure 1, through which the electrical connections are inserted in the interior of the cooking body 30 without breaking the vacuum. In addition, the vacuum pipe 12 and the filling pipe 16 are arranged connected to the second body 40 in a sealed manner and communicated with the second chamber 32.

In view of the fact that the first chamber 31 and the second chamber 32 are communicated to each other, and are therefore subjected to the same pressure, it is the second body 40, and not the first body 20, that must withstand the vacuum conditions. A cooking body 30 is thus obtained with an optimised first chamber 31, in other words it allows the volume of the first chamber 31 to be maximised without this involving a considerable increase in the volume of the cooking body 30. The first body 20 is thus preferably made of stainless steel, although it may also be made of enamelled steel or any other material used in the cooking chambers of conventional ovens, and has a maximum thickness of approximately 0.6 mm. The second body 40 is made of a material that withstands the vacuum conditions, humidity and temperature to which it is subjected during cooking. In the embodiment shown, said second body 40 is made of galvanised steel and has a thickness of between approximately 1,5 mm and approximately 3,0 mm, the thickness preferably being between approximately 1,8 mm and approximately 2,0 mm. In other embodiments other materials able to withstand the requirements demanded of the second body 40 may be used, said materials being metallic, such as stainless steel for example, plastic or even ceramics.

The cooking appliance 1 also comprises flexible main heating means 50, shown in Figure 1, which are arranged in the second chamber 32, fixed to the exterior of the first body, and auxiliary heating means 54, shown in detail in Figure 2, which allow the food deposited in the first chamber 31 to be grilled. The main heating means 50 include resistive wires arranged between two layers of glass-fibre-reinforced silicon, these being suitably distributed in order to heat the first chamber 31 homogenously. In vacuum conditions, the heating means 50 heat the first body 20 substantially by conduction, the first body 20 radiating said heat uniformly towards the interior of the first chamber 21. In vacuum conditions there is practically no convection.

In other embodiments not shown in the figures, the main heating means 50 may comprise at least one bottom sheet fixed to the exterior of the first body by means of an adhesive layer, at least one resistive wire, and at least one top sheet that covers the corresponding resistive wire, fixing it to the corresponding bottom sheet, with the top sheet and the bottom sheet being flexible sheets preferably made of aluminium, which adapt perfectly to the exterior outline of the first body 20.

Furthermore, the auxiliary heating means 54 allow the user to use the grilling option before, during or after vacuum cooking. The auxiliary heating means 54, shown in Figures 1 and 2, thus comprise at least one ceramic heater 55 with a preferably concave shape for concentrating the radiation. In a preferred embodiment, the auxiliary heating means 54 comprise two ceramic heaters 55 arranged substantially parallel and fixed to one of the lateral surfaces 22 of the first body 20, preferably to an upper surface 22a.

The cooking appliance 1 also comprises heat-insulating means 35 that are arranged in the second chamber 32, substantially facing the corresponding heating means 50. The heat-insulating means 35 include at least one reflective sheet 36, preferably metallic, which is arranged fixed to the interior of the second body 40, with the result that part of the radiation emitted by the heating means 50 is reflected, by means of the reflective sheet 36, on said heating means 50, thereby ensuring the proper insulation of the first body 20 and, therefore, the optimum energy performance of the cooking appliance 1. The reflective sheet 36 is fixed to the interior of the second body 40, preferably, by means of an insulating material 37, preferably an injected foam, although in other embodiments not shown in the figures other known fixing means may be used.

Although in the embodiment shown in the figures the heating means 50 are resistive means, in other embodiments not shown in the figures the cooking appliance 1 may be a microwave oven, with the result that the heating means 50 comprise a magnetron that generates the microwaves and a pipe guiding said microwaves to the first cavity 31.

Finally, the cooking appliance 1 comprises support means 60 of the cooking body 30, shown in Figures 1 and 3, the support means 60 including front supports 61 arranged substantially parallel to each other, and rear supports 62, arranged substantially parallel to each other and fixed to one of the lateral rims 41 a of the second body 40, the weight being distributed between both the front supports 61 and rear supports 62.

The cooking body 30 is arranged fixed to the support means 60 at discrete contact points, with the result that the direct contact surface is minimal, the purpose being to reduce the transmission of heat between the cooking body 30 and said support means 60. The discrete contact points are arranged substantially in the corners of the front plate 34, as a result of which the first part 34a of the front plate 34 includes, substantially in each corner, a flap 39 that includes a hole 39b through which the cooking body 30 is screwed to the front supports 61 respectively. The front plate 34 also includes tabs 38 arranged on the sides of the first part 43a, each one of which is inserted in a corresponding groove 61 b arranged on each front support 61.

Finally, the support means 60 also include lateral supports 63 that fix front supports 61 and the rear supports 62 transversally to each other.

## Claims

1. Cooking appliance adapted for low-pressure cooking comprising a cooking body (30) adapted to house the food in its interior, and vacuum means (10) adapted to cause the vacuum inside the cooking body (30), **characterised in that** the cooking body (30) comprises a resistant body (40) adapted to withstand the vacuum conditions, the resistant body (40) including at least one casing (41,42) that delimits inside at least one vacuum chamber (32), and a support plate (43) that includes a first part (43a) fixed perimetral to an end (41 b,42b) of the respective casing (41,42) and a second part (43b) that projects out in relation to the first part (43a), there being arranged fixed to said second part (43b) a sealing means (76) against which a door (75) of the cooking appliance (1) closes in order to seal said vacuum chamber (32).

2. Cooking appliance according to the preceding claim, wherein the first part (43a) and the second part (43b) of the support plate (43) are substantially flat, the support plate (43) including an intermediate part (43c) that joins both the first part (43a) and the second part (43b), the intermediate part (43c) being a bulged surface towards the exterior of the cooking body(30).

3. Cooking appliance according to any of the preceding claims, wherein the first part (43a) of the support plate (43) comprises a gap (43d) that, along with the end (41b,42b) of the respective casing (41,42) forms a housing (46) in which is tightly arranged an insulating means (47) that seals the joint between the end (41 b,42b) of the respective casing (41,42) and the support plate (43).

4. Cooking appliance according to any of the preceding claims, wherein the resistant body (40) comprises a first casing (41) and a second casing (42), both casings (41,42) being arranged fixed facing each other, and of a substantially vaulted geometry.

5. Cooking appliance according to the preceding claim, wherein each casing (41,42) includes a respective perimetral lateral rim (41a,42a) that includes a respective gap (44a,44b), the gaps (44a, 44b) defining between them a housing (44) in which is tightly arranged an insulating means (48) that seals the joint of both casings (41,42).

6. Cooking appliance according to any of the preceding claims, wherein the cooking body (30) comprises an inner body (20) that is arranged inside the resistant body (40), the interior of the inner body (20) delimiting another vacuum chamber (31).

7. Cooking appliance according to the preceding claim, wherein the inner body (20) makes direct contact with the resistant body (40) at discrete points.

8. Cooking appliance according to the preceding claim, wherein the discrete points are arranged in vertices of a perimeter rim (21 b) comprised in the inner body (20).

9. Cooking appliance according to the preceding claim, wherein the inner body (20) includes in each vertex of the perimeter rim (21 b) a hole (21d) through which it is fixed to the second part (34b) of the front plate (34) of the resistant body (40).

10. Cooking appliance according to any of claims 6 to 9, wherein the sealing means (76) against which the door (75) of the cooking appliance (1) closes is arranged fixed to the inner body (20).

11. Cooking appliance according to any of the preceding claims, wherein the resistant body (40) is preferably made of stainless steel of a thickness of between approximately 1,5 mm and approximately 3,00 mm

12. Cooking appliance according to any of the preceding claims, wherein the resistant body (40) has a thickness of between approximately 1,8 mm and approximately 2,0 mm.

## Patentansprüche

1. Kochvorrichtung, ausgelegt zum Kochen unter niedrigem Druck, umfassend einen Kochkörper (30), der ausgelegt ist, um die Nahrungsmittel in seinem Inneren aufzunehmen, und Vakuummittel (10), die ausgelegt sind, um das Vakuum im Kochkörper (30) zu verursachen, **dadurch gekennzeichnet, dass** der Kochkörper (30) einen resistenten Körper (40) umfasst, der ausgelegt ist, um den Vakuumbedingungen standzuhalten, wobei der resistente Körper (40) mindestens eine Ummantelung (41, 42) umfasst, die im Inneren mindestens eine Vakuumkammer (32) begrenzt, und eine Stützplatte (43), die einen ersten Teil (43a) umfasst, der perimetral an ein Ende (41 b, 42b) der entsprechenden Ummantelung (41, 42) befestigt ist, und einen zweiten Teil (43b), der mit Bezug auf den ersten Teil (43a) hervorsteht, wobei, befestigt an den zweiten Teil (43b), ein Dichtungsmittel (76) angeordnet ist, gegen das eine Tür (75) der Kochvorrichtung (1) schließt, um die Vakuumkammer (32) abzudichten.

2. Kochvorrichtung nach dem vorhergehenden Anspruch, wobei der erste Teil (43a) und der zweite Teil (43b) der Stützplatte (43) im Wesentlichen flach sind, wobei die Stützplatte (43) einen Zwischenteil (43c) umfasst, der sowohl den ersten Teil (43a) als auch den zweiten Teil (43b) verbindet, wobei der Zwischenteil (43c) eine gewölbte Fläche hin zur Außenseite des Kochkörpers (30) darstellt.

3. Kochvorrichtung nach einem der vorhergehenden Ansprüche, wobei der erste Teil (43a) der Stützplatte (43) einen Schlitz (43d) umfasst, der zusammen mit dem Ende (41 b, 42b) der entsprechenden Ummantelung (41, 42) eine Einkerbung (46) bildet, in der fest ein Isoliermittel (47) angeordnet ist, das die Verbindung zwischen dem Ende (41 b, 42b) der entsprechenden Ummantelung (41, 42) und der Stützplatte (43) abdichtet.

4. Kochvorrichtung nach einem der vorhergehenden Ansprüche, wobei der resistente Körper (40) eine erste Ummantelung (41) und eine zweite Ummantelung (42) umfasst, wobei beide Ummantelungen (41, 42) fest einander gegenüber liegend angeordnet sind und eine im Wesentlichen gewölbte Geometrie aufweisen.

5. Kochvorrichtung nach dem vorhergehenden Anspruch, wobei jede Ummantelung (41, 42) einen entsprechenden perimetralen Seitenrand (41 a, 42a) aufweist, der einen entsprechenden Schlitz (44a, 44b) umfasst, .wobei die Schlitze (44a, 44b) zwischen sich eine Einkerbung (44) definieren, in der ein Isoliermittel (48) fest angeordnet ist, das die Verbindung beider Ummantelungen (41, 42) abdichtet.

6. Kochvorrichtung nach einem der vorhergehenden Ansprüche, wobei der Kochkörper (30) einen inneren Körper (20) umfasst, der im resistenten Köper (40) angeordnet ist, wobei der Innenraum des inneren Körpers (20) eine weitere Vakuumkammer (31) begrenzt.

7. Kochvorrichtung nach dem vorhergehenden Anspruch, wobei der innere Körper (20) an diskreten Punkten direkt mit dem resistenten Körper (40) in Kontakt steht.

8. Kochvorrichtung nach dem vorhergehenden Anspruch, wobei die diskreten Punkte an Scheitelpunkten eines Umfangsrandes (21 b) angeordnet sind, der im inneren Körper (20) enthalten ist.

9. Kochvorrichtung nach dem vorhergehenden Anspruch, wobei der innere Körper (20) an jedem Scheitelpunkt des Umfangsrandes (21 b) ein Loch (21 d) umfasst, durch das der zweite Teil (34b) der vorderen Platte (34) des resistenten Körpers (40) befestigt ist.

10. Kochvorrichtung nach einem der Ansprüche 6 bis 9, wobei das Dichtungsmittel (76), gegen das die Tür (75) der Kochvorrichtung (1) schließt, an den inneren Körper (20) befestigt angeordnet ist.

11. Kochvorrichtung nach einem der vorhergehenden Ansprüche, wobei der resistente Körper (40) vorzugsweise aus rostfreiem Stahl mit einer Dicke von zwischen ungefähr 1,5 mm und ungefähr 3,00 mm hergestellt ist.

12. Kochvorrichtung nach einem der vorhergehenden Ansprüche, wobei der resistente Körper (40) eine Dicke von zwischen ungefähr 1,8 mm und ungefähr 2,0 mm aufweist.

## Revendications

1. Appareil de cuisson destiné à la cuisson à basse pression, qui comprend un corps de cuisson (30) adapté pour contenir les aliments, et un moyen de vide (10) adapté pour provoquer le vide à l'intérieur dudit corps de cuisson (30), **caractérisé en ce que** ledit corps de cuisson (30) comprend un corps résistant (40) adapté pour résister aux conditions de vide, ledit corps résistant (40) comprenant au moins une enceinte (41, 42) qui délimite à l'intérieur au moins une chambre de vide (32), et une plaque de support (43) qui comprend une première partie (43a) fixée de manière périphérique par rapport à une extrémité (41 b, 42b) de l'enceinte respective (41, 42), et une seconde partie (43b) en saillie par rapport à ladite première partie (43a), un moyen d'étanchéité (76) étant fixé sur ladite seconde partie (43b), contre lequel une porte (75) dudit appareil de cuisson (1) se ferme afin de fermer ladite chambre de vide (32).

2. Appareil de cuisson selon la revendication précédente, dans lequel ladite première partie (43a) et ladite seconde partie (43b) de ladite plaque de support (43) sont sensiblement plates, ladite plaque de support (43) comprenant une partie intermédiaire (43c) qui joint ladite première partie (43a) et ladite seconde partie (43b), ladite partie intermédiaire (43c) étant une surface bombée vers l'extérieur dudit corps de cuisson (30).

3. Appareil de cuisson selon l'une quelconque des revendications précédentes, dans lequel ladite première partie (43a) et ladite plaque de support (43) comprennent un espace (43d) qui, avec ladite extrémité (41 b, 42b) de ladite enceinte respective (41, 42), forme un logement (46) dans lequel est fixé un moyen d'isolation (47) qui ferme la jonction entre ladite extrémité (41 b, 42b) de ladite enceinte respective (41, 42) et ladite plaque de support (43).

4. Appareil de cuisson selon l'une quelconque des revendications précédentes, dans lequel ledit corps résistant (40) comprend une première enceinte (41) et une seconde enceinte (42), lesdites deux enceintes (41, 42) étant fixées l'une face à l'autre, et ayant une géométrie sensiblement voûtée.

5. Appareil de cuisson selon la revendication précédente, dans lequel chaque enceinte (41, 42) comprend un bord latéral périphérique respectif (41a, 42a) qui comprend un espace respectif (44a, 44b), lesdits espaces (44a, 44b) définissant entre eux un logement (44) dans lequel est fixé un moyen d'isolation (48) qui ferme la jonction entre lesdites enceintes (41, 42).

6. Appareil de cuisson selon l'une quelconque des revendications précédentes, dans lequel ledit corps de cuisson (30) comprend un corps intérieur (20) qui est placé à l'intérieur dudit corps résistant (40), l'intérieur dudit corps intérieur (20) délimitant une autre chambre de vide (31).

7. Appareil de cuisson selon la revendication précédente, dans lequel ledit corps intérieur (20) effectue un contact direct avec ledit corps résistant (40) au niveau de points discrets.

8. Appareil de cuisson selon la revendication précédente, dans lequel lesdits points discrets sont placés dans les sommets d'un bord périphérique (21b) compris dans ledit corps intérieur (20).

9. Appareil de cuisson selon la revendication précédente, dans lequel ledit corps intérieur (20) comprend, dans chaque sommet dudit bord périphérique (21 b), un orifice (21 d) par lequel il est fixé sur ladite seconde partie (34b) de la plaque avant (34) dudit corps résistant (40).

10. Appareil de cuisson selon l'une quelconque des revendications 6 à 9, dans lequel ledit moyen d'étanchéité (76) contre lequel ladite porte (75) dudit appareil de cuisson (1) se ferme est fixé sur ledit corps intérieur (20).

11. Appareil de cuisson selon l'une quelconque des revendications précédentes, dans lequel ledit corps résistant (40) est de préférence en acier inoxydable d'une épaisseur d'environ 1,5 mm à environ 3 mm.

12. Appareil de cuisson selon l'une quelconque des revendications précédentes, dans lequel ledit corps résistant (40) possède une épaisseur d'environ 1,8 mm à environ 2 mm.
